# EUROPÄISCHE PATENTSCHRIFT

(11) **EP 3 628 883 B1**
(45) Veröffentlichungstag und Bekanntmachung des Hinweises auf die Patenterteilung: **09.02.2022**
(21) Anmeldenummer: 19214565.4
(22) Anmeldetag: 09.12.2019
(51) Int. Cl.: F16C 33/66, F04D 19/04, F16C 33/76, F16C 19/06

(54) **VAKUUMPUMPE**
VACUUM PUMP
POMPE À VIDE

(43) Veröffentlichungstag der Anmeldung: 01.04.2020
(73) Patentinhaber: PFEIFFER VACUUM GMBH, 35614 Asslar (DE)
(72) Erfinder: Mekota, Mirko, 35630 Ehringshausen (DE); Schweighöfer, Michael, 35641 Schöffengrund (DE)
(74) Vertreter: Manitz Finsterwald Patent- und Rechtsanwaltspartnerschaft mbB

(56) Entgegenhaltungen:
- EP-A1- 2 826 999
- EP-A2- 2 990 656
- WO-A1-2014/174273
- DE-A1-102012 220 040

## Beschreibung

Die vorliegende Erfindung betrifft eine Vakuumpumpe, insbesondere Turbomolekularvakuumpumpe, mit einer Rotorwelle, einem Wälzlager zur Lagerung der Rotorwelle, einem Betriebsmittelspeicher zur Speicherung eines Betriebsmittels für das Wälzlager in einem Speichermaterial und einem Gasanschluss, der mit einer dem Betriebsmittelspeicher zugewandten, ersten Seite des Wälzlagers verbunden ist.

Vakuumpumpen mit einer Rotorwelle, einem Wälzlager zur Lagerung der Rotorwelle, einem Betriebsmittelspeicher zur Speicherung eines Betriebsmittels für das Wälzlager in einem Speichermaterial und einem Gasanschluss sind in der EP 2 826 999 A1, DE 10 2012 220 040 A1, WO 2014/174273 A1 offenbart. Weiteren Stand der Technik bildet die EP 2 990 656 A2. EP 2 826 999 A1 beschreibt eine Vakuumpumpe gemäß dem Oberbegriff der Ansprüche 1 und 3.

Die erste Seite des Wälzlagers begrenzt typischerweise einen Hohlraum zwischen Lager und Betriebsmittelspeicher. Bei einer beispielhaften Vakuumpumpe des Standes der Technik wird ein Bereich zwischen einem Wälzlager und einem Betriebsmittelspeicher, also insbesondere ein solcher Hohlraum, im Betrieb evakuiert, weil dieser Bereich mit einem Vorvakuumanschluss der Pumpe verbunden ist. Zum Beispiel wird dabei das Gas durch das Wälzlager hindurch abgesaugt. Dies birgt allerdings die Gefahr, dass Betriebsmittel mit abgesaugt wird. Es sind Vakuumpumpen bekannt, bei denen ein Vorvakuumanschluss direkt mit diesem Bereich bzw. einer dem Betriebsmittelspeicher zugewandten Seite des Wälzlagers verbunden ist. Hierdurch lässt sich die genannte Gefahr verringern. Allerdings sind die bekannten Konstruktionen relativ aufwendig und verwenden zusätzliche Bauteile.

Es ist eine Aufgabe der Erfindung, eine Vakuumpumpe der eingangs genannten Art bereitzustellen, die besonders einfach aufgebaut ist.

Diese Aufgabe wird durch eine Vakuumpumpe mit den in Anspruch 1 genannten Merkmalen gelöst. Gemäß einem ersten Aspekt der Erfindung ist die erste Seite des Wälzlagers mit dem Gasanschluss durch einen Kanal verbunden, welcher von dem

Betriebsmittelspeicher gebildet ist.

Der Erfindung liegt die Idee zu Grunde, dass der ohnehin nötige Betriebsmittelspeicher mit einem Kanal ausgestattet werden kann und somit zusätzliche Bauteile oder etwa zusätzliche Ausnehmungen in den Betriebsmittelspeicher begrenzenden Metallbauteilen entfallen können. Folglich ermöglicht der Kanal im Betriebsmittelspeicher einen besonders einfachen Aufbau und insbesondere eine besonders einfache und kostengünstige Herstellung.

Bevorzugt kann es sich bei dem Gasanschluss um einen Vorvakuumanschluss oder einen Sperrgasanschluss handeln.

Gemäß einem weiteren Aspekt der Erfindung wird die Aufgabe durch eine Vakuumpumpe mit den Merkmalen nach Anspruch 3 gelöst. Gemäß diesem weiteren Aspekt der Erfindung ist der Gasanschluss ein Sperrgasanschluss.

Die Sperrgaszufuhr erfolgt somit direkt in den Bereich zwischen Wälzlager und Betriebsmittelspeicher. Das Wälzlager wird durch das Sperrgas geschützt, und zwar auf konstruktiv besonders einfache Weise.

Bei einem besonders einfach aufgebauten Ausführungsbeispiel ist vorgesehen, dass die erste Seite des Wälzlagers mit dem Sperrgasanschluss durch einen Kanal verbunden ist, welcher von dem Betriebsmittelspeicher gebildet ist.

Ein von dem Betriebsmittelspeicher gebildeter Kanal zum Gasanschluss stellt eine konstruktiv besonders einfache Lösung zur Gasführung dar. Anstelle von zusätzlichen Führungsbauteilen oder aufwendigen konstruktiven Maßnahmen an den den Betriebsmittelspeicher einfassenden Bauteilen kann das Gas einfach durch den Betriebsmittelspeicher hindurchgeführt werden, indem ein Kanal in diesem ausgebildet wird.

Der Betriebsmittelspeicher umfasst ein Speichermaterial. Das Speichermaterial ist so ausgebildet, dass es das Betriebsmittel in sich aufnimmt aber auch wieder abgeben kann. Dies bedeutet insbesondere, dass das Speichermaterial kein Vollmaterial ist, sondern Zwischenräume für das Betriebsmittel aufweist. Diese Zwischenräume sind allerdings sehr klein, insbesondere sodass sich das Betriebsmittel von selbst im Wesentlichen im gesamten Betriebsmittelspeicher verteilt und nicht ohne weiteres herausfließt, insbesondere aufgrund einer Kapillarkraft. Das Speichermaterial kann beispielsweise ein Kapillarmaterial, porös, schwammartig und/oder durch ein Fasermaterial gebildet sein. Bevorzugt kann es sich bei dem Material um Filz handeln. Bei dem Betriebsmittel handelt es sich insbesondere um Öl.

Der Kanal ist allgemein deutlich größer als die Zwischenräume des Speichermaterials, nämlich so groß, dass durch ihn Gas angesaugt oder zugeführt werden kann, und zwar ohne dass das insbesondere flüssige Betriebsmittel die Gasführung blockiert. Der Kanal bildet also einen leeren Hohlraum, der durch das Speichermaterial, welches mit Betriebsmittel durchsetzt ist, hindurch verläuft, insbesondere zumindest mittelbar vom Speichermaterial begrenzt ist, und der erfindungsgemäß zur Gasführung verwendet wird. Das Speichermaterial kann den Kanal z.B. unmittelbar begrenzen. Dies ist eine besonders einfache Ausführungsform. Grundsätzlich kann der Kanal aber beispielsweise auch durch ein Zwischenteil unmittelbar begrenzt sein, etwa durch ein Rohr. So kann der Kanal z.B. besser von Betriebsmittelansammlungen geschützt werden. Ein derartiges Rohr kann beispielsweise eine Ausnehmung des Betriebsmittelspeichers auskleiden, welche den Kanal definiert.

Der Kanal ist insbesondere durch das Speichermaterial definiert. Der Kanal verläuft durch den Betriebsmittelspeicher hindurch.

Allgemein kann der Kanal bevorzugt unabhängig von und/oder zusätzlich zu einer Zentralausnehmung des Betriebsmittelspeichers vorgesehen sein. Eine Zentralausnehmung des Betriebsmittelspeichers ist als solche bekannt und wird üblicherweise zu dem Zweck vorgesehen, dass sich ein kegelförmiger Endabschnitt der Rotorwelle, insbesondere eine Spritzmutter, in die Zentralausnehmung hinein erstreckt und dort mit dem Betriebsmittelspeicher in Kontakt steht.

Gemäß einer Ausführungsform ist vorgesehen, dass der Kanal mit zumindest einem Abschnitt radial und/oder exzentrisch in Bezug auf die Rotorwelle verläuft. Insbesondere verläuft der Kanal also nicht zentrisch und in Verlängerung der Rotorwelle, sondern führt insbesondere von dieser weg. Außerdem ermöglicht die radiale bzw. exzentrische Anordnung eine kompakte Bauweise, da keine zusätzliche axiale Baulänge benötigt wird. Radial bzw. exzentrisch zur Rotorwelle ist hingegen meist genügend Material im Betriebsmittelspeicher vorhanden, um darin den gewünschten Kanalverlauf zu realisieren.

Generell kann der Kanal im Betriebsmittelspeicher zum Beispiel einen radialen Abschnitt und/oder einen axialen Abschnitt umfassen. Insbesondere ist auch eine Kombination von radialen und axialen Abschnitten vorteilhaft. Grundsätzlich kann auch wenigstens ein schräger Abschnitt vorgesehen sein.

Bei einer Weiterbildung ist vorgesehen, dass die erste Seite des Wälzlagers mit einer dem Betriebsmittelspeicher abgewandten, zweiten Seite des Wälzlagers verbunden ist. Dies ermöglicht auf besonders einfache Weise einen Druckausgleich zwischen beiden Seiten des Lagers. Hierdurch wird auf besonders sichere Weise gewährleistet, dass zumindest weitgehend kein Betriebsmittel über das Lager verloren geht. Denn aufgrund des Druckausgleichs erfolgt im Wesentlichen kein Gasstrom durch das Lager, der Betriebsmittel mitreißen könnte. Die Verbindung verläuft vorzugsweise durch den Kanal des Betriebsmittelspeichers.

Eine dem Betriebsmittelspeicher abgewandte, zweite Seite des Wälzlagers kann z.B. mit einem Motorraum verbunden sein. Dies ermöglicht auf einfache Weise zum Beispiel eine gemeinsame Evakuierung des Motorraums und des Bereichs zwischen Lager und Betriebsmittelspeicher.

Eine besonders einfache Ausführungsform sieht vor, dass der Kanal von einer oder mehreren gestanzten Ausnehmungen im Speichermaterial gebildet ist. Typische Speichermaterialien für Betriebsmittelspeicher lassen sich auf einfache Weise durch Stanzen bedarfsgerecht gestalten. Dabei muss lediglich das Stanzwerkzeug angepasst werden. Anschließend erhöhen sich jedoch nicht die Kosten für ein jeweiliges gefertigtes Teil.

Der Betriebsmittelspeicher kann allgemein bevorzugt aus mehreren Lagen von Speichermaterial gebildet sein. Dies stellt einen besonders einfachen Aufbau dar. Ein axialer Abschnitt des Kanals kann insbesondere durch axial fluchtend angeordnete Ausnehmungen in den Lagen gebildet sein. Somit lässt sich der Kanal auf einfache Weise bedarfsgerecht gestalten.

Der Betriebsmittelspeicher kann generell eine Zentralausnehmung aufweisen. Dabei kann sich zum Beispiel ein Endabschnitt der Rotorwelle, insbesondere ein kegelförmiger Abschnitt, zum Beispiel eine sogenannte Spritzmutter, in die Zentralausnehmung hinein erstrecken. Der Betriebsmittelspeicher steht insbesondere im Bereich der Zentralausnehmung in Kontakt mit dem Endabschnitt der Rotorwelle. Gemäß einer Weiterbildung ist vorgesehen, dass sich der Kanal ausgehend von der Zentralausnehmung im Betriebsmittelspeicher erstreckt. Die Zentralausnehmung kann zum Beispiel im Wesentlichen zylinderförmig ausgebildet sein und/oder der Kanal kann sich senkrecht zur Zentralausnehmung ausgehend von dieser erstrecken.

Allgemein beispielhaft umfasst die Vakuumpumpe an der ersten Seite des Wälzlagers einen Hohlraum. Dieser kann zum Beispiel von der ersten Seite des Wälzlagers, einem Endabschnitt der Rotorwelle, einer Lagerfassung und/oder dem Betriebsmittelspeicher begrenzt sein. Der Kanal im Betriebsmittelspeicher verbindet insbesondere diesen Hohlraum mit dem Gasanschluss und/oder erstreckt sich ausgehend von diesem Hohlraum.

Bevorzugt kann eine Mündung des Kanals in eine Zentralausnehmung des Betriebsmittelspeichers und/oder in den Hohlraum beabstandet von einem, insbesondere dem Wälzlager abgewandten, axialen Ende des Betriebsmittelspeichers, der Zentralausnehmung und/oder des Hohlraums angeordnet sein. Hierdurch wird auf einfache Weise sichergestellt, dass das Betriebsmittel zumindest in einer, insbesondere bevorzugten, Orientierung der Vakuumpumpe nicht in die Mündung bzw. den Kanal hinein läuft bzw. dass die Mündung nicht im flüssigen Betriebsmittel steht.

Bei einer Weiterbildung ist vorgesehen, dass zumindest ein Abschnitt des Kanals, insbesondere ein radialer und/oder ein axialer Abschnitt, vollständig im Inneren des Betriebsmittelspeichers ausgebildet ist. Dies bedeutet, dass ein Querschnitt des Kanals in diesem Abschnitt zu allen Seiten vom Betriebsmittelspeicher begrenzt ist. Alternativ kann etwa ein Abschnitt des Kanals in einem Außenbereich des Betriebsmittelspeichers vorgesehen sein, also nach außen hin offen sein.

Der Betriebsmittelspeicher kann bevorzugt unmittelbar in ein Bauteil der Vakuumpumpe eingesetzt sein, welches ein Festkörper, ein Strukturbauteil, ein Gehäusebauteil, ein Unterteil der Vakuumpumpe und/oder aus Metall ausgebildet ist. Im Stand der Technik ist es bekannt, den Betriebsmittelspeicher in einem separaten Kunststoffbauteil eingesetzt anzuordnen, welches außerdem einen Kanal zum Gasanschluss definiert. Durch die Erfindung kann auf ein derartiges Bauteil insbesondere verzichtet werden.

Der Kanal des Betriebsmittelspeichers kann z.B., vorzugsweise unmittelbar, an einen Kanal anschließen, der in einem mit dem Betriebsmittelspeicher in Anlage befindlichen Bauteil ausgebildet ist. Dies erlaubt eine vorteilhafte Gasführung. Der Kanal des Bauteils führt insbesondere zum Gasanschluss. Grundsätzlich kann aber zum Beispiel auch ein Zwischenhohlraum vorgesehen sein. Die Kanäle müssen also nicht unbedingt unmittelbar aneinander anschließen. Dies kann zum Beispiel konstruktiv einfach realisiert werden. Bei dem Bauteil kann es sich bevorzugt um einen Festkörper, ein Strukturbauteil, ein Gehäusebauteil, ein Unterteil der

Vakuumpumpe handeln und/oder es kann aus Metall ausgebildet sein.

Insbesondere kann der Kanal des Betriebsmittelspeichers, insbesondere unmittelbar, an einen Kanal anschließen, der in einem Bauteil definiert ist, welches ein Festkörper, ein Strukturbauteil, ein Gehäusebauteil, ein Unterteil der Vakuumpumpe und/oder aus Metall ausgebildet ist.

Allgemein bevorzugt kann die Vakuumpumpe eine Betriebsmittel-Umlaufschmierung für das Wälzlager umfassen, welche insbesondere mittels eines kegelförmigen Abschnitts der Rotorwelle angetrieben sein kann. Weiter allgemein bevorzugt kann die Vakuumpumpe eine sogenannte Hybridlagerung aufweisen, nämlich einerseits das genannte Wälzlager und andererseits ein Magnetlager.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: einen Querschnitt einer erfindungsgemäßen Vakuumpumpe im Bereich eines Betriebsmittelspeichers und eines Wälzlagers,
- Fig. 7: einen Querschnitt einer weiteren erfindungsgemäßen Vakuumpumpe.

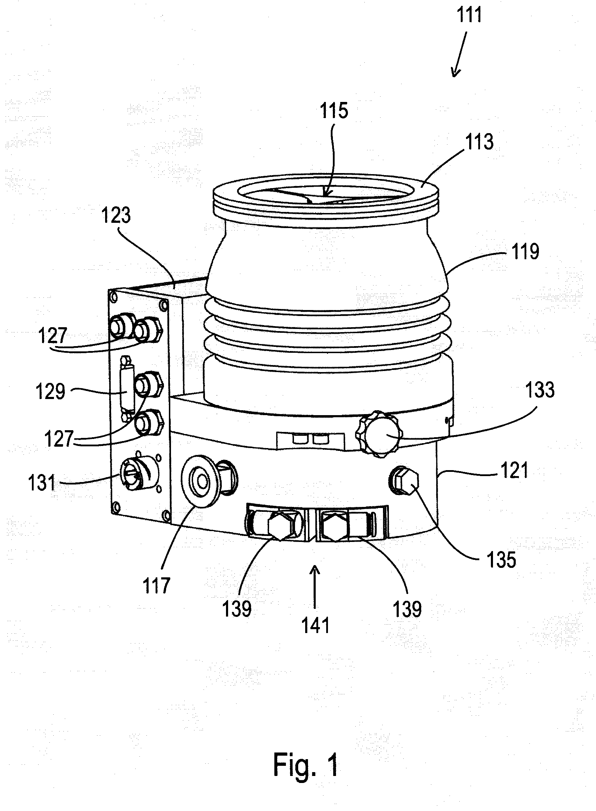

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

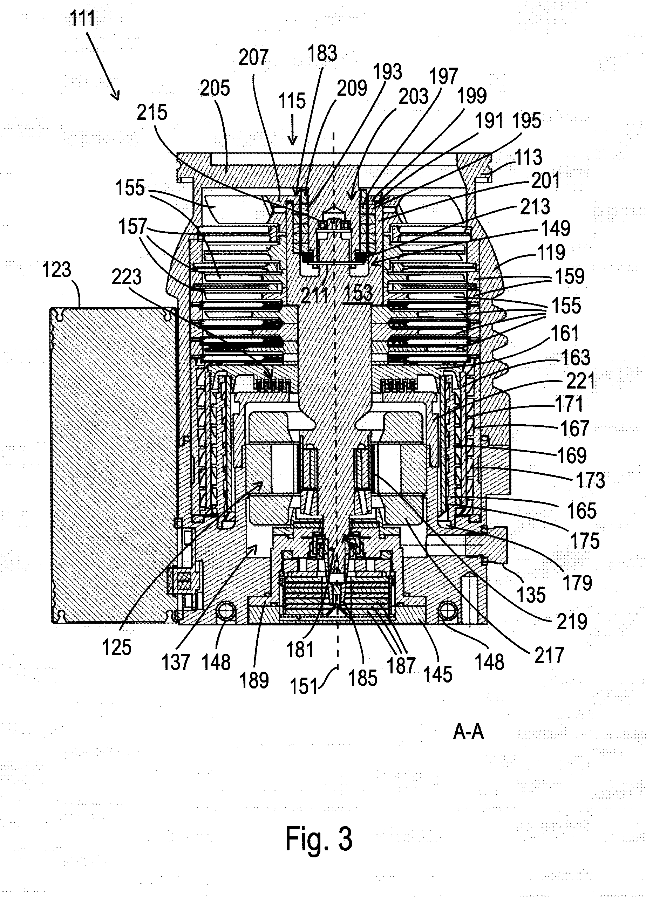

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

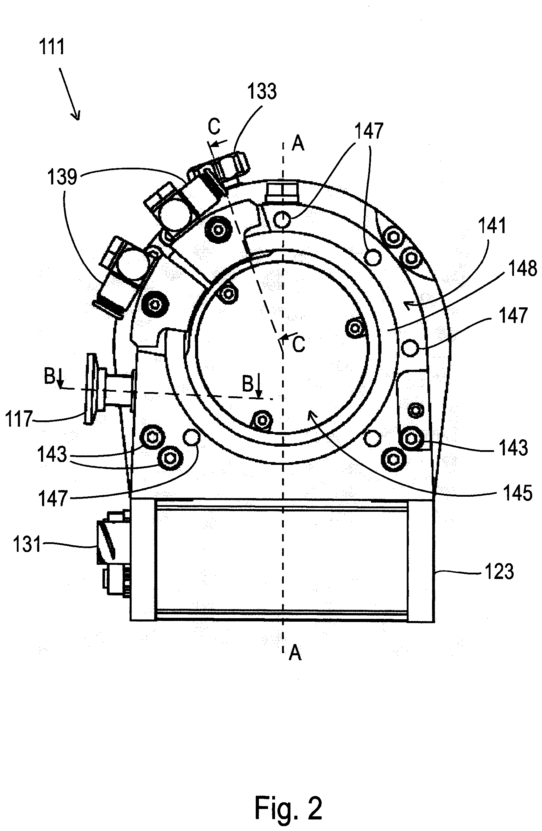

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

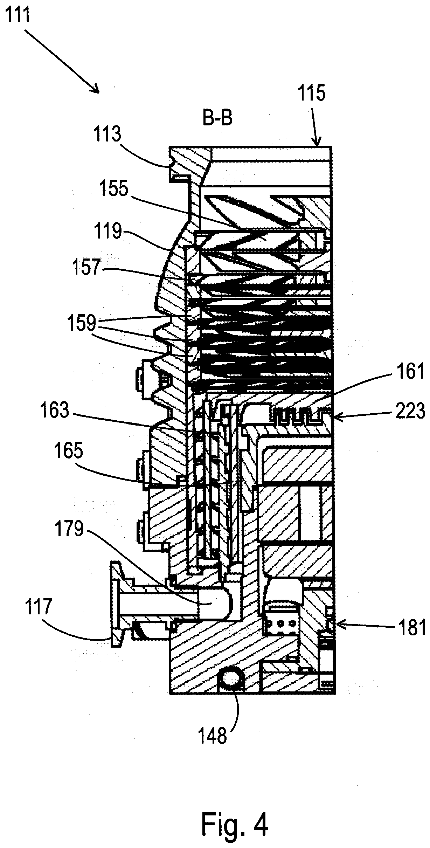

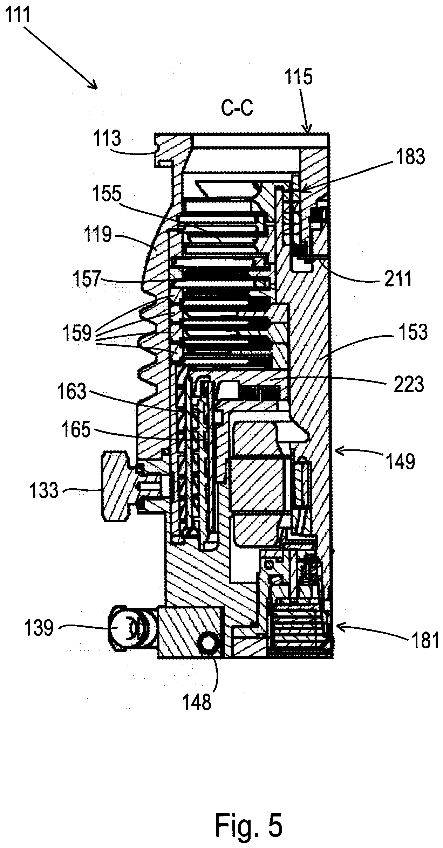

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Die nachfolgend beschriebenen Vakuumpumpen können insbesondere durch die vorstehend beschriebenen Merkmale einer Vakuumpumpe, einzeln und in Kombination, weitergebildet werden.

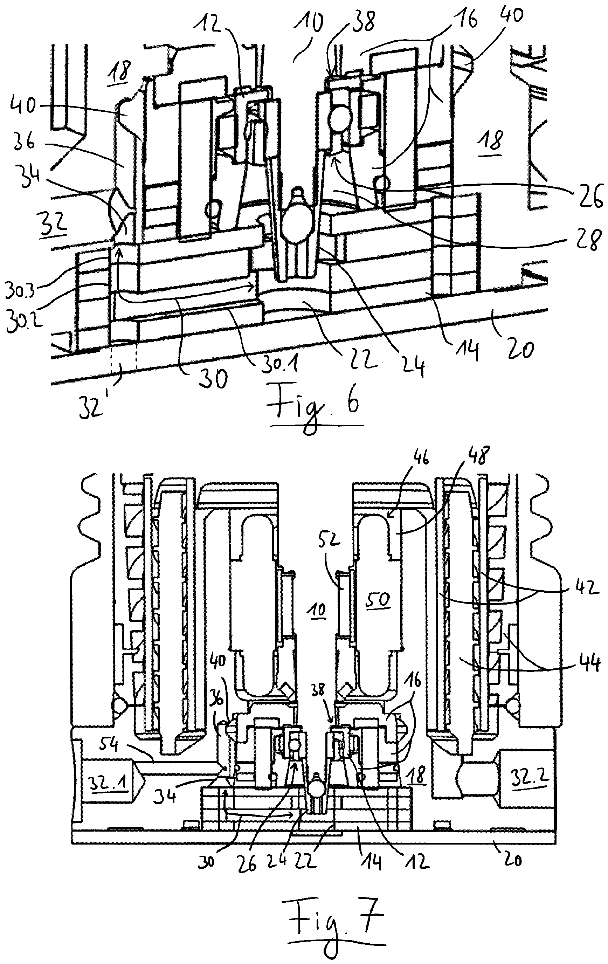

Fig. 6 zeigt einen Querschnitt einer Vakuumpumpe, insbesondere Turbomolekularvakuumpumpe, wobei insbesondere ein Ende einer Rotorwelle 10, welches von einem Wälzlager 12 gelagert ist, und ein Betriebsmittelspeicher 14 sichtbar sind. Das Wälzlager 12 ist durch eine Lagerfassung 16 eingefasst und an einem Gehäusebauteil 18 abgestützt. Ein Deckel 20 verschließt eine Ausnehmung des Gehäusebauteils 18, in der die Lagerfassung 16, das Wälzlager 12 und der Betriebsmittelspeicher 14 angeordnet sind. Der Betriebsmittelspeicher 14 ist unmittelbar in das Gehäusebauteil 18 eingesetzt angeordnet.

Der Betriebsmittelspeicher 14 umfasst mehrere Lagen eines Speichermaterials, nämlich in dieser Ausführungsform vier Lagen. Bei dem Speichermaterial kann es sich z.B. um Filz handeln. Der Betriebsmittelspeicher 14 weist eine Zentralausnehmung 22 auf, die konzentrisch zur Rotorwelle 10 angeordnet ist und ein Ende der Rotorwelle 10 aufnimmt, welches als Spritzmutter 24 ausgebildet ist. Die Zentralausnehmung 22 ist durch fluchtend angeordnete Ausnehmungen in den jeweiligen Lagen des Betriebsmittelspeichers 14 gebildet.

Die Zentralausnehmung 22, die Lagerfassung 16 und die Spritzmutter 24 definieren zusammen mit einer ersten, dem Betriebsmittelspeicher 14 zugewandten Seite 26 des Wälzlagers 12 einen Hohlraum 28. Die erste Seite 26 des Wälzlagers 12 und der Hohlraum 28 sind über einen Kanal 30 mit einem Gasanschluss 32 verbunden. Bei dem Gasanschluss 32 kann es sich beispielsweise um einen Sperrgasanschluss oder um einen Vorvakuumanschluss handeln.

Der Kanal 30 ist durch mehrere, insbesondere gestanzte, Ausnehmungen gebildet. So erstreckt sich ein erster Kanalabschnitt bzw. eine erste Ausnehmung 30.1 radial zur Rotorwelle 10 und ausgehend von der Zentralausnehmung 22. Ein zweiter Kanalabschnitt verläuft axial und ist durch zwei fluchtend angeordnete Ausnehmungen 30.2 und 30.3 gebildet. Der Kanal 30 ist hier durch das Speichermaterial unmittelbar begrenzt. Alternativ könnte z.B. auch ein Rohr oder allgemein ein Zwischenbauteil in dem Kanal 30 angeordnet sein, beispielsweise um die Gasführung weiter zu verbessern.

Der Kanal 30 schließt an einen Kanal 34 an, der im Gehäusebauteil 18 ausgebildet ist. Das Gehäusebauteil 18 ist aus Metall, insbesondere aus Aluminium, hergestellt und bildet ein Strukturbauteil der Pumpe. Der Kanal 34 verbindet den Kanal 30 und somit die erste Seite 26 des Wälzlagers 12 mit dem Gasanschluss 32.

Es ist außerdem ein Kanal 36 vorgesehen, der die erste Seite 26 des Wälzlagers 12 mit einer zweiten Seite 38 des Wälzlagers 12 verbindet, nämlich in dieser Ausführungsform über den Hohlraum 28, den Kanal 30, den Kanal 34, einen Ringkanal 40 sowie einen hier nicht sichtbaren Durchgang vom Ringkanal 40 in den Bereich oberhalb der Lagerfassung 16.

In Fig. 6 ist außerdem ein weiterer Gasanschluss 32' gestrichelt angedeutet, welcher beispielsweise alternativ oder zusätzlich zum Gasanschluss 32 vorgesehen sein kann. Der Gasanschluss 32' ist im Deckel 20 ausgebildet. Dabei können insbesondere auch ohne den Gasanschluss 32 die Kanäle 34, 36 und 40, also allgemein eine Verbindung zwischen der ersten Seite 26 des Wälzlagers 12 zur zweiten Seite 38 des Wälzlagers 12 vorgesehen sein. Bei dem Gasanschluss 32 kann es sich ebenfalls um einen Sperrgasanschluss oder um einen Vorvakuumanschluss handeln. Insbesondere kann der Gasanschluss 32 ein Vorvakuumanschluss und der Gasanschluss 32' ein Sperrgasanschluss sein.

Die Fig. 7 zeigt einen weiteren Querschnitt einer Vakuumpumpe, insbesondere Turbomolekularvakuumpumpe, in dem ebenfalls ein Ende einer Rotorwelle 10, welches von einem Wälzlager 12 gelagert ist, und ein Betriebsmittelspeicher 14 sichtbar sind. Ähnliche Elemente werden hier mit den gleichen Bezugszeichen bezeichnet, wobei zu deren Details weitgehend auf die obigen Ausführungen verwiesen werden kann.

Die in Fig. 7 gezeigte Vakuumpumpe umfasst zwei von der Rotorwelle 10 getragene Holweckrotoren 42, insbesondere Rotorhülsen nach oben beschriebener Art, die zusammen mit der Rotorwelle 10 relativ zu korrespondierenden Holweckstatoren 44, insbesondere Statorhülsen nach oben beschriebener Art, rotieren, um eine Pumpwirkung zu erzeugen.

Die Rotorwelle 10 ist von einem Motor 46 angetrieben, der in einem Motorraum 48 angeordnet ist. Ein Motorstator 50 des Motors 46 ist am Gehäusebauteil 18 befestigt, während auf der Rotorwelle 10 mehrere Permanentmagneten oder ein mehrpoliger Permanentmagnet 52 angeordnet sind, die einen Rotor des Motors 46 bilden.

Es sind zwei Gasanschlüsse 32.1 und 32.2 vorgesehen, wobei der erste Gasanschluss 32.1 ein Sperrgasanschluss und der zweite Gasanschluss 32.2 ein Vorvakuumanschluss ist.

Der Sperrgasanschluss 32.1 ist über Kanäle 54, 34 und 30 mit der ersten Seite 26 des Wälzlagers 12 verbunden. Außerdem ist er über Kanäle 36 und 40 mit der zweiten Seite 38 des Wälzlagers 12 verbunden. Der Ringkanal 40 weist dabei eine hier ebenfalls nicht sichtbare Verbindung auf, die sich mit Bezug auf Fig. 7 vom Ringkanal 40 nach oben in den Motorraum 48 erstreckt und über diesen mit der ersten Seite 38 des Wälzlagers 12 verbunden ist.

Der Vorvakuumanschluss 32.2 ist ebenfalls mit dem Motorraum 48 verbunden, und zwar derart, dass das Sperrgas vom Sperrgasanschluss 32.1 kommend in jedem Fall den Motor 46 und insbesondere dessen Spalt zwischen den Permanentmagneten 52 und dem Motorstator 50 passiert. Bei konstanter Sperrgaszufuhr ist hierdurch ein konstanter Sperrgasstrom durch den Motor 46 hin zum Vorvakuumanschluss 32.2 gewährleistet, sodass kein Prozessgas, welches von den Holweckrotoren und -statoren 42, 44 gefördert wird, in den Motorraum 48 und zum Wälzlager 12 gelangen kann.

Wenn auf den Kanal 36 und den Kanal 40 oder allgemein auf eine Verbindung der ersten Seite 26 des Wälzlagers 12 mit der zweiten Seite 38 des Wälzlagers 12 verzichtet wird, strömt das gesamte Sperrgas durch das Wälzlager 12 in den Motorraum 48 und anschließend durch den Motor 46 zum Vorvakuumanschluss 32.2. Dies stellt ebenfalls eine mögliche Ausführungsform dar. Die Verbindung stellt einen Druckausgleich zwischen der ersten Seite 26 und der zweiten Seite 38 des Wälzlagers 12 her, was den besonderen Vorteil hat, dass im Wesentlichen kein Betriebsmittel des Wälzlagers 12 durch dieses hindurchgesaugt bzw. hindurchgeblasen wird. Somit geht einerseits wenig Betriebsmittel verloren und andererseits wird das Prozessgas nicht mit Betriebsmittel kontaminiert.

Es zeigt sich, dass ein besonders einfacher Aufbau erreicht werden kann, indem entsprechende Bohrungen und Kanäle direkt in dem Speichermaterial des Betriebsmittelspeichers vorgesehen werden, durch die beim Evakuieren das Gas aus dem Bereich hinter dem Wälzlager, insbesondere Kugellager, herausgesaugt wird bzw. durch die Sperrgas eingebracht wird. Diese Kanäle sind bevorzugt mit dem Vorvakuumanschluss der Pumpe, insbesondere Turbomolekularvakuumpumpe - entweder mittelbar oder unmittelbar - verbunden. Hierdurch können zusätzliche Bauteile, wie z.B. ein im Stand der Technik verwendetes Kunststofftöpfchen, in welches der Betriebsmittelspeicher eingesetzt ist, eingespart werden und es sind keine aufwendigen Geometrien in Unterteil, Lagerfassung oder Deckel zu fertigen. Da der Betriebsmittelspeicher in den meisten Fällen aus gestanzten Filz- oder Kapillarmaterialien besteht, müssen diese Bohrungen und Kanäle nur einmal im Stanzwerkzeug vorgesehen werden und erzeugen dann keine Kosten pro gefertigtes Teil mehr. Des Weiteren wird Betriebsmittel während des Evakuierungsvorganges wieder im Speichermaterial aufgefangen.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 10: Rotorwelle
- 12: Wälzlager
- 14: Betriebsmittelspeicher
- 16: Lagerfassung
- 18: Gehäusebauteil
- 20: Deckel
- 22: Zentralausnehmung
- 24: Spritzmutter
- 26: erste Seite
- 28: Hohlraum
- 30: Kanal
- 32: Gasanschluss
- 34: Kanal
- 36: Kanal
- 38: zweite Seite
- 40: Ringkanal
- 42: Holweckrotor
- 44: Holweckstator
- 46: Motor
- 48: Motorraum
- 50: Motorstator
- 52: Permanentmagnet
- 54: Kanal

## Patentansprüche

1. Vakuumpumpe, insbesondere Turbomolekularvakuumpumpe, mit einer Rotorwelle (10),
einem Wälzlager (12) zur Lagerung der Rotorwelle (10),
einem Betriebsmittelspeicher (14) zur Speicherung eines Betriebsmittels für das Wälzlager (12) in einem Speichermaterial und
einem Gasanschluss (32), **dadurch gekennzeichnet, dass** der Gasanschluss (32) mit einer dem Betriebsmittelspeicher (14)
zugewandten, ersten Seite (26) des Wälzlagers (12) verbunden ist, wobei die erste Seite (26) des Wälzlagers (12) mit dem Gasanschluss (32) durch einen Kanal (30) verbunden ist, welcher von dem Betriebsmittelspeicher (30) gebildet ist.

2. Vakuumpumpe nach Anspruch 1,
wobei der Gasanschluss ein Vorvakuumanschluss (32.2) oder ein Sperrgasanschluss (32.1) ist.

3. Vakuumpumpe, insbesondere nach einem der vorhergehenden Ansprüche, insbesondere Turbomolekularvakuumpumpe, mit
einer Rotorwelle (10),
einem Wälzlager (12) zur Lagerung der Rotorwelle (10),
einem Betriebsmittelspeicher (14) zur Speicherung eines Betriebsmittels für das Wälzlager (12) in einem Speichermaterial und
einem Sperrgasanschluss (32.1), **dadurch gekennzeichnet, dass** der Sperrgasanschluss (32.1) mit einer dem Betriebsmittelspeicher (14) zugewandten, ersten Seite (26) des Wälzlagers (12) verbunden ist.

4. Vakuumpumpe nach Anspruch 3,
wobei die erste Seite (26) des Wälzlagers (12) mit dem Sperrgasanschluss (32.1) durch einen Kanal (30) verbunden ist, welcher von dem Betriebsmittelspeicher (14) gebildet ist.

5. Vakuumpumpe nach wenigstens einem der Ansprüche 1, 2 und 4, wobei der Kanal (30) mit zumindest einem Abschnitt radial und/oder exzentrisch in Bezug auf die Rotorwelle (10) verläuft.

6. Vakuumpumpe nach wenigstens einem der Ansprüche 1, 2, 4 und 5, wobei der Kanal (30) im Betriebsmittelspeicher (14) einen radialen Abschnitt (30.1) und/oder einen axialen Abschnitt (30.2, 30.3) umfasst.

7. Vakuumpumpe nach wenigstens einem der Ansprüche 1, 2 und 4 bis 6, wobei die erste Seite (26) des Wälzlagers (12) mit einer dem Betriebsmittelspeicher (14) abgewandten, zweiten Seite (38) des Wälzlagers (12) verbunden ist.

8. Vakuumpumpe nach wenigstens einem der Ansprüche 1, 2 und 4 bis 7, wobei eine dem Betriebsmittelspeicher (14) abgewandte, zweite Seite (28) des Wälzlagers (12) mit einem Motorraum (48) verbunden ist.

9. Vakuumpumpe nach wenigstens einem der Ansprüche 1, 2 und 4 bis 8, wobei der Kanal (30) von einer oder mehreren gestanzten Ausnehmungen (30.1, 30.2, 30.3) im Speichermaterial gebildet ist.

10. Vakuumpumpe nach wenigstens einem der Ansprüche 1, 2 und 4 bis 9, wobei der Betriebsmittelspeicher (14) aus mehreren Lagen von Speichermaterial gebildet ist, wobei ein axialer Abschnitt des Kanals (30) durch axial fluchtend angeordnete Ausnehmungen (30.2, 30.3) in den Lagen gebildet ist.

11. Vakuumpumpe nach wenigstens einem der Ansprüche 1, 2 und 4 bis 10, wobei der Betriebsmittelspeicher (14) eine Zentralausnehmung (22) aufweist und wobei sich der Kanal (30) ausgehend von der Zentralausnehmung (22) im Betriebsmittelspeicher (14) erstreckt.

12. Vakuumpumpe nach wenigstens einem der Ansprüche 1, 2 und 4 bis 11, wobei zumindest ein Abschnitt des Kanals (30) vollständig im Inneren des Betriebsmittelspeichers (14) ausgebildet ist.

13. Vakuumpumpe nach wenigstens einem der Ansprüche 1, 2 und 4 bis 12, wobei der Betriebsmittelspeicher (14) unmittelbar in ein Bauteil (18) der Vakuumpumpe eingesetzt ist, welches ein Festkörper, ein Strukturbauteil, ein Gehäusebauteil, ein Unterteil der Vakuumpumpe und/oder aus Metall ausgebildet ist.

14. Vakuumpumpe nach wenigstens einem der Ansprüche 1, 2 und 4 bis 13, wobei der Kanal (30) des Betriebsmittelspeichers (14) unmittelbar an einen Kanal (34) anschließt, der in einem mit dem Betriebsmittelspeicher (14) in Anlage befindlichen Bauteil (18) ausgebildet ist.

15. Vakuumpumpe nach wenigstens einem der Ansprüche 1, 2 und 4 bis 14, wobei der Kanal (30) des Betriebsmittelspeichers (14) an einen Kanal (30) anschließt, der in einem Bauteil (18) definiert ist, welches ein Festkörper, ein Strukturbauteil, ein Gehäusebauteil, ein Unterteil der Vakuumpumpe und/oder aus Metall ausgebildet ist.

## Claims

1. A vacuum pump, in particular a turbomolecular vacuum pump, comprising
a rotor shaft (10);
a rolling element bearing (12) for supporting the rotor shaft (10);
an operating medium store (14) for storing an operating medium for the rolling element bearing (12) in a storage material; and
a gas connection (32), **characterized in that**
the gas connection (32) is connected to a first side (26) of the rolling element bearing (12) facing the operating medium store (14),
with the first side (26) of the rolling element bearing (12) being connected to the gas connection (32) by a channel (30) which is formed by the operating medium store (30).

2. A vacuum pump in accordance with claim 1,
wherein the gas connection is a pre-vacuum connection (32.2) or a sealing gas connection (32.1).

3. A vacuum pump, in particular in accordance with one of the preceding claims, in particular a turbomolecular vacuum pump, comprising
a rotor shaft (10);
a rolling element bearing (12) for supporting the rotor shaft (10);
an operating medium store (14) for storing an operating medium for the rolling element bearing (12) in a storage material; and
a sealing gas connection (32.1), **characterized in that** the sealing gas connection (32.1) is connected to a first side (26) of the rolling element bearing (12) facing the operating medium store (14).

4. A vacuum pump in accordance with claim 3,
wherein the first side (26) of the rolling element bearing (12) is connected to the sealing gas connection (32.1) by a channel (30) which is formed by the operating medium store (14).

5. A vacuum pump in accordance with at least one of the claims 1, 2 and 4, wherein at least one section of the channel (30) extends radially and/or eccentrically with respect to the rotor shaft (10).

6. A vacuum pump in accordance with at least one of the claims 1, 2, 4 and 5, wherein the channel (30) comprises a radial section (30.1) and/or an axial section (30.2, 30.3) in the operating medium store (14).

7. A vacuum pump in accordance with at least one of the claims 1, 2 and 4 to 6,
wherein the first side (26) of the rolling element bearing (12) is connected to a second side (38) of the rolling element bearing (12) facing away from the operating medium store (14).

8. A vacuum pump in accordance with at least one of the claims 1, 2 and 4 to 7,
wherein a second side (28) of the rolling element bearing (12) facing away from the operating medium store (14) is connected to a motor space (48).

9. A vacuum pump in accordance with at least one of the claims 1, 2 and 4 to 8,
wherein the channel (30) is formed by one or more punched recesses (30.1, 30.2, 30.3) in the storage material.

10. A vacuum pump in accordance with at least one of the claims 1, 2 and 4 to 9,
wherein the operating medium store (14) is formed from a plurality of layers of storage material, wherein an axial section of the channel (30) is formed by recesses (30.2, 30.3) arranged in axial alignment in the layers.

11. A vacuum pump in accordance with at least one of the claims 1, 2 and 4 to 10,
wherein the operating medium reservoir (14) has a central recess (22), and wherein the channel (30) extends starting from the central recess (22) in the operating medium store (14).

12. A vacuum pump in accordance with at least one of the claims 1, 2 and 4 to 11,
wherein at least one section of the channel (30) is formed completely in the interior of the operating medium store (14).

13. A vacuum pump in accordance with at least one of the claims 1, 2 and 4 to 12,
wherein the operating medium store (14) is directly inserted into a component (18) of the vacuum pump which is a solid body, a structural component, a housing component, a lower part of the vacuum pump and/or is formed from metal.

14. A vacuum pump in accordance with at least one of the claims 1, 2 and 4 to 13,
wherein the channel (30) of the operating medium store (14) directly adjoins a channel (34) which is formed in a component (18) in contact with the operating medium store (14).

15. A vacuum pump in accordance with at least one of the claims 1, 2 and 4 to 14,
wherein the channel (30) of the operating medium store (14) adjoins a channel (30) which is defined in a component (18) which is a solid body, a structural component, a housing component, a lower part of the vacuum pump and/or is formed from metal.

## Revendications

1. Pompe à vide, en particulier pompe à vide turbomoléculaire, comprenant
un arbre de rotor (10),
un palier à roulement (12) pour le montage de l'arbre de rotor (10),
un réservoir de fluide de fonctionnement (14) pour stocker un fluide de fonctionnement, destiné au palier à roulement (12), dans un matériau de stockage, et
un raccord de gaz (32),
**caractérisée en ce que**
le raccord de gaz (32) est relié à un premier côté (26) du palier à roulement (12) tourné vers le réservoir de fluide de fonctionnement (14),
le premier côté (26) du palier à roulement (12) étant relié au raccord de gaz (32) par l'intermédiaire d'un canal (30) qui est formé par le réservoir de fluide de fonctionnement (30).

2. Pompe à vide selon la revendication 1,
dans laquelle le raccord de gaz est un raccord à vide préliminaire (32.2) ou un raccord de gaz de barrage (32.1).

3. Pompe à vide, en particulier selon l'une des revendications précédentes, en particulier pompe à vide turbomoléculaire, comprenant
un arbre de rotor (10),
un palier à roulement (12) pour le montage de l'arbre de rotor (10),
un réservoir de fluide de fonctionnement (14) pour stocker un fluide de fonctionnement, destiné au palier à roulement (12), dans un matériau de stockage, et
un raccord de gaz de barrage (32.1),
**caractérisée en ce que**
le raccord de gaz de barrage (32.1) est relié à un premier côté (26) du palier à roulement (12) tourné vers le réservoir de fluide de fonctionnement (14).

4. Pompe à vide selon la revendication 3,
dans laquelle le premier côté (26) du palier à roulement (12) est relié au raccord de gaz de barrage (32.1) par l'intermédiaire d'un canal (30) qui est formé par le réservoir de fluide de fonctionnement (14).

5. Pompe à vide selon l'une au moins des revendications 1, 2 et 4, dans laquelle le canal (30) comprend au moins une portion qui s'étend radialement et/ou de façon excentrée par rapport à l'arbre de rotor (10).

6. Pompe à vide selon l'une au moins des revendications 1, 2, 4 et 5, dans laquelle le canal (30) dans le réservoir de fluide de fonctionnement (14) comprend une portion radiale (30.1) et/ou une portion axiale (30.2, 30.3).

7. Pompe à vide selon l'une au moins des revendications 1, 2 et 4 à 6, dans laquelle le premier côté (26) du palier à roulement (12) est relié à un deuxième côté (38) du palier à roulement (12), opposé au réservoir de fluide de fonctionnement (14).

8. Pompe à vide selon l'une au moins des revendications 1, 2 et 4 à 7, dans laquelle un deuxième côté (28) du palier à roulement (12), détourné du réservoir de fluide de fonctionnement (14), est relié à un compartiment moteur (48).

9. Pompe à vide selon l'une au moins des revendications 1, 2 et 4 à 8, dans laquelle le canal (30) est formé par un ou par plusieurs évidements (30.1, 30.2, 30.3) poinçonnés dans le matériau de stockage.

10. Pompe à vide selon l'une au moins des revendications 1, 2 et 4 à 9, dans laquelle le réservoir de fluide de fonctionnement (14) est formé de plusieurs couches de matériau de stockage, une portion axiale du canal (30) étant formée par des évidements (30.2, 30.3) disposés en alignement axial dans les couches.

11. Pompe à vide selon l'une au moins des revendications 1, 2 et 4 à 10, dans laquelle le réservoir de fluide de fonctionnement (14) présente un évidement central (22), et le canal (30) s'étend à partir de l'évidement central (22) dans le réservoir de fluide de fonctionnement (14).

12. Pompe à vide selon l'une au moins des revendications 1, 2 et 4 à 11, dans laquelle une portion au moins du canal (30) est formée entièrement à l'intérieur du réservoir de fluide de fonctionnement (14).

13. Pompe à vide selon l'une au moins des revendications 1, 2 et 4 à 12, dans laquelle le réservoir de fluide de fonctionnement (14) est mis en place directement dans un composant (18) de la pompe à vide qui est un corps solide, un composant structurel, un composant de boîtier, une partie inférieure de la pompe à vide et/ou qui est réalisé en métal.

14. Pompe à vide selon l'une au moins des revendications 1, 2 et 4 à 13, dans laquelle le canal (30) du réservoir de fluide de fonctionnement (14) se raccordant directement à un canal (34) formé dans un composant (18) en contact avec le réservoir de fluide de fonctionnement (14).

15. Pompe à vide selon l'une au moins des revendications 1, 2 et 4 à 14, dans laquelle le canal (30) du réservoir de fluide de fonctionnement (14) se raccorde à un canal (30) défini dans un composant (18) qui est un corps solide, un composant structurel, un composant de boîtier, une partie inférieure de la pompe à vide et/ou qui est réalisé en métal.
